# EUROPEAN PATENT APPLICATION

(11) **EP 4 421 474 A1**
(43) Date of publication of application: **28.08.2024**
(21) Application number: 23740249.0
(22) Date of filing: 10.01.2023
(51) Int. Cl.: G01N 15/02, C22B 1/16

(54) **INFORMATION PROCESSING METHOD, INFORMATION PROCESSING DEVICE, INFORMATION PROCESSING SYSTEM, INFORMATION PROCESSING PROGRAM, AND SINTERED ORE PRODUCTION METHOD**

(30) Priority: 11.01.2022 JP 2022002497
(71) Applicant: JFE Steel Corporation, Tokyo 100-0011 (JP)
(72) Inventor: TSUBOI Toshiki, Tokyo 100-0011 (JP); YUKI Hayato, Tokyo 100-0011 (JP)
(74) Representative: Haseltine Lake Kempner LLP
(86) International application number: PCT/JP2023/000332
(87) International publication number: WO 2023/136240

(57) **Abstract**

An information processing method includes: measuring profile data of deposited material that is a plurality of particles, the profile data including distance data to the deposited material or image data of the deposited material; detecting each of the plurality of particles based on the profile data; calculating an index based on the profile data; and extracting particles in a surface layer among the deposited material, based on results of the detecting for each of the plurality of particles and the index calculated based on the profile data.

## Description

### TECHNICAL FIELD

The present disclosure relates to an information processing method, an information processing device, an information processing system, an information processing program, and a method of producing sintered ore.

### BACKGROUND

Devices capable of measuring particle size of each particle of granular industrial raw material such as coke with high measurement precision are known (see, for example, Patent Literature (PTL) 1).

### CITATION LIST

### Patent Literature

### PTL 1: JP 2014-092494 A

### SUMMARY

### (Technical Problem)

When producing sintered ore and the like from raw material, production conditions are set according to properties of particles included in the raw material. In order to enhance product quality, improvement in particle property calculation precision is sought.

Therefore, it would be helpful to provide an information processing method, an information processing device, an information processing system, and an information processing program that can improve particle property calculation precision, and a method of producing sintered ore based on a particle property calculation result.

### (Solution to Problem)

An information processing method according to an embodiment of the present disclosure comprises: obtaining profile data of raw material that includes particles, the profile data including distance data to the raw material or image data of the raw material; detecting feature points based on the profile data; and detecting, from the profile data, contours of at least some of the particles, based on the feature points.

An information processing device according to an embodiment of the present disclosure comprises a controller configured to execute the information processing method.

An information processing system according to an embodiment of the present disclosure comprises the information processing device and a measuring device that outputs the profile data of the raw material to the information processing device.

An information processing program according to an embodiment of the present disclosure is configured to cause a processor to execute the information processing method.

A method of producing sintered ore according to an embodiment of the present disclosure comprises: measuring a particle property of particles included in a raw material by executing the information processing method; and setting a production condition of sintered ore using the raw material based on a calculation result of the particle property.

### (Advantageous Effect)

According to the information processing method, the information processing device, the information processing system, the information processing program, and the method of producing sintered ore according to the present disclosure, particle property calculation precision may be improved. Further, a calculation result of the particle property may be reflected in the method of producing sintered ore.

### BRIEF DESCRIPTION OF THE DRAWINGS

In the accompanying drawings:
FIG. 1 is a schematic diagram illustrating an example configuration of an information processing system according to the present disclosure;
FIG. 2 is a block diagram illustrating an example configuration of an information processing system according to the present disclosure;
FIG. 3 is a flowchart illustrating example procedures of an information processing method according to the present disclosure;
FIG. 4 is a cross-section diagram illustrating an example of profile data;
FIG. 5 is a diagram illustrating an example of feature points detected in profile data;
FIG. 6 is a diagram illustrating an example of detecting a contour of a particle in directions spreading from a feature point;
FIG. 7 is a diagram illustrating an example of detecting a contour of a particle by widening an initial contour set based on a feature point;
FIG. 8 is a diagram illustrating a comparative example of detecting a contour of a particle by narrowing an initial contour set outside the particle;
FIG. 9A is a diagram illustrating an initial contour set outside of profile data as a comparative example;
FIG. 9B is a diagram illustrating a particle contour detected by narrowing the initial contour of FIG. 9A;
FIG. 10A is a diagram illustrating an example of profile data as an image;
FIG. 10B is a diagram illustrating particles identified by detecting contours from the profile data of FIG. 10A using a method according to a comparative example;
FIG. 10C is a diagram illustrating particles identified by detecting contours from the profile data of FIG. 10A using an information processing method according to the present disclosure;
FIG. 11 is a graph illustrating an example of correlation between particle size of sieve analysis and particle size by calculation;
FIG. 12 is a flowchart illustrating another example of procedures of an information processing method;
FIG. 13 is a schematic diagram illustrating an example configuration of a combination of a raw material charging device and a sintering furnace; and
FIG. 14 is a schematic diagram illustrating another example configuration of a combination of a raw material charging device and a sintering furnace.

### DETAILED DESCRIPTION

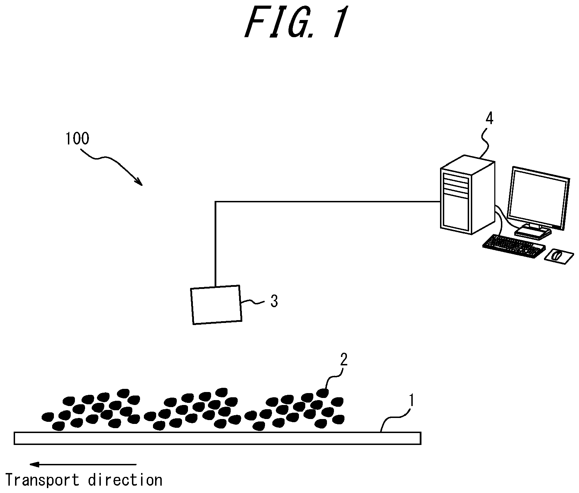

Embodiments of an information processing system 100 (see FIG. 1, for example), an information processing device 4 (see FIG. 1, for example), and an information processing method according to the present disclosure are described below, with reference to the drawings. Each drawing is schematic and may differ from actual implementation. Further, the following embodiments are examples of devices or methods for embodying the technical concept of the present disclosure, and are not limiting. That is, various changes may be made to the technical concept of the present disclosure within the technical scope described in the claims.

In a production process using a raw material such as a mineral, particle size, particle shape, or particle size distribution of the raw material affects operation of the production process. Therefore, there is a need for a property of a raw material to be measured and ascertained in advance. In particular, in the sintering process of producing sintered ore such as granulated particles by charging raw material such as fine ore or auxiliary raw material into a drum mixer and sintering in a sintering machine, the particle size of the granulated particles produced affects aeration in the sintering machine. Accordingly, ascertaining particle size or particle size distribution of raw material for granulated particles is important.

To ascertain particle size distribution of a raw material, particle size distribution may be analyzed by sampling and sieving a raw material. However, analysis using a sieve is time-consuming, and therefore reflecting analysis results in a real time blast furnace operation is difficult. Therefore, there is a need for technology to measure particle size distribution of a raw material in real time. For example, particle size distribution of a raw material may be measured in real time by obtaining measurement data such as an image or shape of an upper portion of a raw material using a camera or a laser rangefinder.

In order to calculate properties of each particle from the measurement data of a raw material including particles, each particle needs to be detected individually. Particles may be detected individually by detecting contours of particles in a raw material and recognizing regions within contours as individual particle regions.

Object contours may typically be detected based on changes in spatial height data. For example, an edge that is a contour of a raw material is detected by detecting a position of a spatial recess based on 3D shape data of a group of deposited rocks on a conveyor obtained using a laser rangefinder (see Ref. 1 below).

Ref. 1: Matthew J. Thurley, Automated Online Measurement of Particle Size Distribution using 3D Range Data, IFAC Proceedings Volumes, 2009, 42, 134-139

However, the smaller the particles of a raw material to be measured, the more indistinct the contour of each particle is, and the less change in height of the raw material as a whole. As a result, the smaller the particles of a raw material, the less precise detection of particle contours tends to be. Further, in order to calculate height of each individual rock point when using the method of Ref. 1, computational load may increase. Accordingly, calculating particle size in real time is difficult.

According to the information processing system 100, the information processing device 4, and the information processing method according to the present disclosure, detection precision of contours of particles included in a raw material may be improved. Further, particle contours may be robustly detected. As a result, particle property calculation precision may be improved. For example, in operation of a production process such as that of a blast furnace, contours of particles of coke, ore, sintered ore, or the like, which are raw materials deposited and transported on a conveyor, may be detected with high precision. Further, contours of particles of fine ore, limestone, granulated particles, coal, or the like, which are smaller than sintered ore and the like and are used to produce sintered ore and the like, may be detected with high precision.

### (Example configuration of information processing system 100)

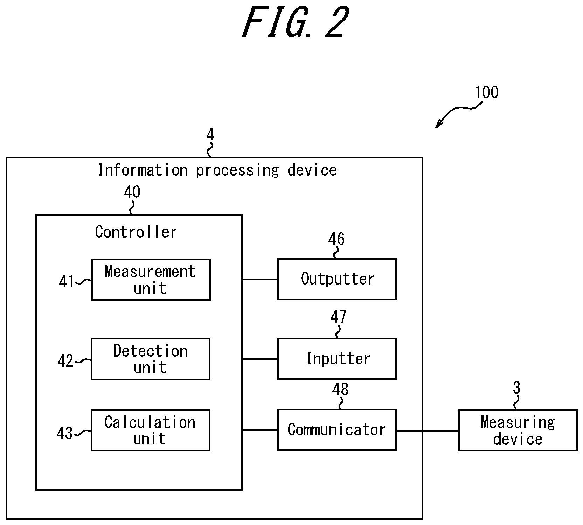

As illustrated in FIG. 1 and FIG. 2, the information processing system 100 according to an embodiment includes the information processing device 4 and a measuring device 3. In the information processing system 100, the measuring device 3 obtains information about particles 2 that are deposited on and transported by a conveyor 1. The information processing device 4 detects contours of the particles 2 based on information regarding the particles 2. Further, the information processing device 4 calculates a property of the particles 2 based on a detection result of contours of the particles 2.

According to the present embodiment, the conveyor 1 is a conveyor that transports granulated particles used in a sintering machine in the iron and steel industry, but is not limited to this example. Further, the particles 2 are assumed to be granulated particles, which is one example of a raw material used in the iron and steel industry, but are not limited to this example. The particles 2 may include, for example, coke, ore, sintered ore, pellets, limestone, rock, coal, fine ore, coke breeze, or the like.

### <Information processing device 4>

The information processing device 4 includes a controller 40, a communicator 48, an outputter 46, and an inputter 47. The controller 40 may include at least one processor, such as a central processing unit (CPU) or graphics processing unit (GPU), to control and manage various functions of the information processing device 4. The controller 40 may include a single processor or a plurality of processors. The controller 40 including at least one processor may realize functions of the information processing device 4 by reading and executing a program stored in a storage, described later.

The controller 40 may be subdivided into components that realize various functions of the information processing device 4. According to the present embodiment, the controller 40 includes a measurement unit 41, a detection unit 42, and a calculation unit 43. Operations of each component of the controller 40 are described below.

The controller 40 may include a storage. The storage stores various types of information or data. The storage may store, for example, a program to be executed in the controller 40, data used in processing executed in the controller 40, a result of processing, and the like. Further, the storage may function as working memory of the controller 40. The storage may be configured as semiconductor memory, for example, but is not limited to this example. For example, the storage may be configured as internal memory of a processor used as the controller 40 or as a hard disk drive (HDD) accessible from the controller 40. The storage may be configured as a non-transitory readable medium. The storage may be configured as an integral part of the controller 40 or as a separate unit from the controller 40.

The communicator 48 may be configured to include a communication interface for communicating with other devices such as the measuring device 3 by wired or wireless means. The communication interface may be configured to communicate with other devices via a network. The communicator 48 may be configured to include input/output ports that input and output data to and from other devices. The communicator 48 sends and receives required data and signals to and from a process computer or high-level system. The communicator 48 may communicate based on a wired communication standard and may communicate based on a wireless communication standard. Example wireless communication standards may include cellular phone communication standards such as 3G, 4G, 5G, and the like. Further, example wireless communication standards may include IEEE 802.11 and Bluetooth^{®} (Bluetooth is a registered trademark in Japan, other countries, or both). The communicator 48 may support one or more of such communication standards. The communicator 48 is not limited to these examples and may communicate with other devices and input/output data based on various standards.

The outputter 46 outputs information obtained from the controller 40. The outputter 46 may notify a user of information by outputting visual information such as text, graphics, images, or the like, either directly or via an external device or the like. The outputter 46 may include a display device, and may be wired or wirelessly connected to a display device. Example display devices include various displays such as liquid crystal displays, for example. The outputter 46 may notify a user or information by outputting auditory information, such as voice, either directly or via an external device or the like. The outputter 46 may include a speaker or other audio output device, and may be wired or wirelessly connected to an audio output device. The outputter 46 may include a vibration device. The outputter 46 may notify a user of information not only by outputting visual information, auditory information, or tactile information, but also by outputting information that a user may perceive with another sense, either directly or via an external device or the like.

The inputter 47 may include an input device that accepts input from a user. Example input devices include keyboards or physical keys, touch panels or touch sensors, and pointing devices such as mice. Input devices are not limited to these examples and a variety of other devices may be included.

### <Measuring device 3>

According to the present embodiment, the measuring device 3 is a laser rangefinder. The laser rangefinder emits a laser beam in a line along the width direction of the conveyor 1 (the paper depth direction in FIG. 1) to measure distance to the particles 2, which are an object to be measured, one line at a time. The particles 2 move in the direction of transport due to being deposited on and conveyed by the conveyor 1. The laser rangefinder measures distance to the particles 2 in a line at a fixed measurement cycle and can generate three-dimensional shape data of the particles 2 by integrating measured values of distance in each line.

The method described above is a method of acquiring three-dimensional shape of an object to be measured by the so-called optical cutting method. As the measuring device 3, a laser rangefinder and data processing means used to implement the optical cutting method may be employed.

A measurement region of the laser rangefinder may be set in a region equal to the width of the conveyor 1 or larger than the width of the conveyor 1. The laser rangefinder may be configured to measure all of the particles 2 conveyed by the conveyor 1.

Measurement density of the three-dimensional shape data is increased by shortening the cycle when the laser rangefinder measures the distance to the particles 2 in a line. According to the present embodiment, measurement frequency is set to 4 kHz (the measurement cycle in this case is 0.25 ms).

The measuring device 3 is not limited to a laser rangefinder, and may be configured as a distance measuring camera using the time of flight (ToF) method. The measuring device 3 generates three-dimensional shape data of the particles 2 deposited on the conveyor 1 or distance data from the measuring device 3 to the particles 2, and outputs to the information processing device 4.

The measuring device 3 may be configured to include an imaging device such as a camera, for example. The measuring device 3 image captures deposited material, including the particles 2 deposited on the conveyor 1, and outputs captured images to the information processing device 4. The measuring device 3 generates image data of the particles 2 deposited on the conveyor 1 and outputs to the information processing device 4. Further, the measuring device 3 may use image data to generate distance data from the measuring device 3 to the particles 2, and output to the information processing device 4. For example, the measuring device 3 may be configured as a stereo camera that generates distance data by correlating two images using a stereo technique and two cameras. Further, the measuring device 3 may convert image data to distance data based on correlation between luminance of an image capture of the particles 2 and distance to the particles 2 (for example, the higher the luminance, the closer a point is to the measuring device 3).

### (Example of operation of information processing system 100)

In the information processing system 100, the controller 40 of the information processing device 4 obtains three-dimensional shape data, distance data, or image data of the particles 2 deposited on the conveyor 1 from the measuring device 3 via the communicator 48. Three-dimensional shape data, distance data, or image data may also be referred to as profile data. The controller 40 detects contours of the particles 2 deposited on the conveyor 1 based on the profile data obtained from the measuring device 3. Further, the controller 40 may calculate a property of the particles 2 based on a detection result of contours of the particles 2.

### <Detection of contours of particles 2>

Profile data of the particles 2 being transported as deposited material on the conveyor 1 is represented as a single instance of profile data that does not differentiate the particles 2 from each other. The controller 40 needs to distinguish and detect individual particles of the particles 2 in order to calculate a property of the particles 2. The controller 40 can distinguish individual particles of the particles 2 by detecting contours of at least some of the particles 2 and recognizing regions enclosed by contours as the particles 2.

The smaller the particles 2 are, the more indistinct the outline of the particles 2 is in profile data of the particles 2. For example, when the profile data is three-dimensional shape data or distance data, the smaller the particles 2 are, the smaller the changes in height of the particles 2 may be. When the profile data is image data, the smaller the changes in height of the particles 2, the smaller difference in luminance may be. As a result, contours of the particles 2 are less likely to be detected from the profile data.

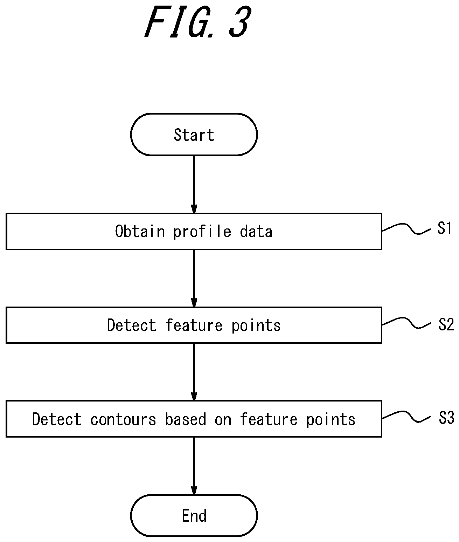

In the information processing system 100 according to the present embodiment, the controller 40 of the information processing device 4 detects feature points of the particles 2 from the profile data and detects contours of the particles 2 based on the feature points of the particles 2. The following is a description, based on flowchart procedures illustrated in FIG. 3, of example operations in which the controller 40 detects contours of the particles 2 based on the profile data of the particles 2. The controller 40 is able to detect contours of the particles 2 by executing the information processing method including the flowchart procedures illustrated in FIG. 3. The information processing method may be realized as an information processing program to be executed by a processor of the controller 40. The information processing program may be stored on a non-transitory computer-readable storage medium.

The controller 40 obtains profile data of the particles 2 (step S1). Specifically, the controller 40 may generate the profile data of the particles 2 by processing measurement data from the measuring device 3 in the measurement unit 41, and may obtain the profile data of the particles 2 from the measuring device 3. The controller 40 may realize the functions of obtaining or measuring the profile data of the particles 2 as the measurement unit 41.

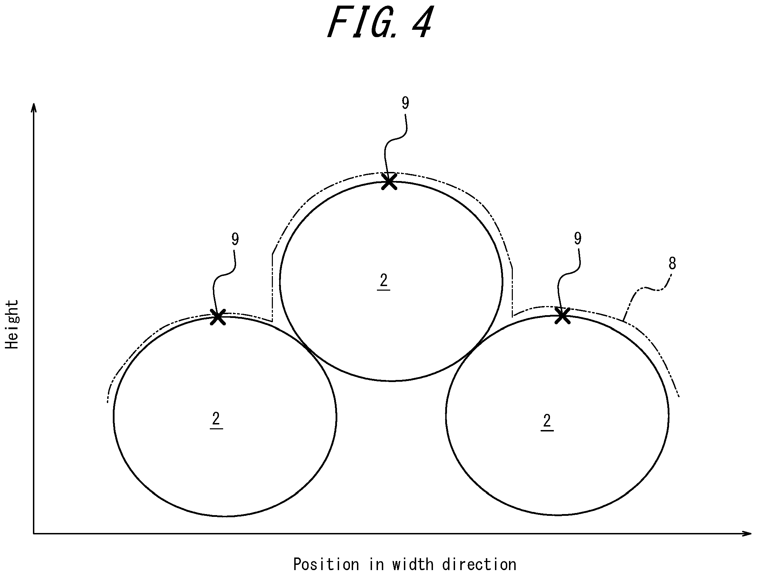

The controller 40 detects feature points of the particles 2 from the profile data (step S2). The controller 40 may realize the function of detecting feature points of the particles 2 as the detection unit 42. Specifically, the controller 40 may detect vertices of the particles 2 as feature points of the particles 2. Detecting vertices as feature points is based on the fact that the number of vertices detected for one of the particles 2 is approximately one. When the profile data is height data of the particles 2, the controller 40 may detect local maximum values of the height of the particles 2 as the vertices of the particles 2. When the profile data is image data of the particles 2, the controller 40 may detect the vertices of the particles 2 by image processing. According to the present embodiment, the controller 40 may obtain, as the profile data, distance data representing a relationship between height of the particles 2 and position in the width direction of the conveyor 1 of the particles 2, as illustrated in FIG. 4. In FIG. 4, feature points 9 are represented by × as points corresponding to the vertices of the particles 2.

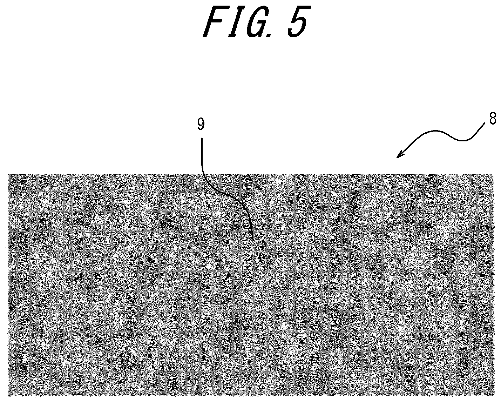

Further, the controller 40 may obtain an image representing distance data of the particles 2 as the profile data, as illustrated in FIG. 5. In FIG. 5, the closer to the measuring device 3, the more a point is represented as a point of high luminance (near white color). In FIG. 5, the feature points 9 are represented by white dots as the points corresponding to the vertices of the particles 2 (the points having a local maximum value of height). The points having local maximum values of height are approximately positioned in central portions of the particles 2. Further, the number of the feature points 9 may be confirmed visually to roughly correspond to the number of the particles 2. Even when the number or position of the particles 2 changes for each profile data measured during online calculation, where the particles 2 are positioned in the profile data may be easily determined by detecting points where the profile data has local maximum values as feature points.

When the profile data is image data of the particles 2, the controller 40 may detect feature points of the particles 2 by image processing. The controller 40 may detect feature points of the particles 2 from the image data based on a trained model trained by machine learning, for example. The controller 40 may detect feature points of the particles 2 from the image data based on a defined algorithm such as pattern matching.

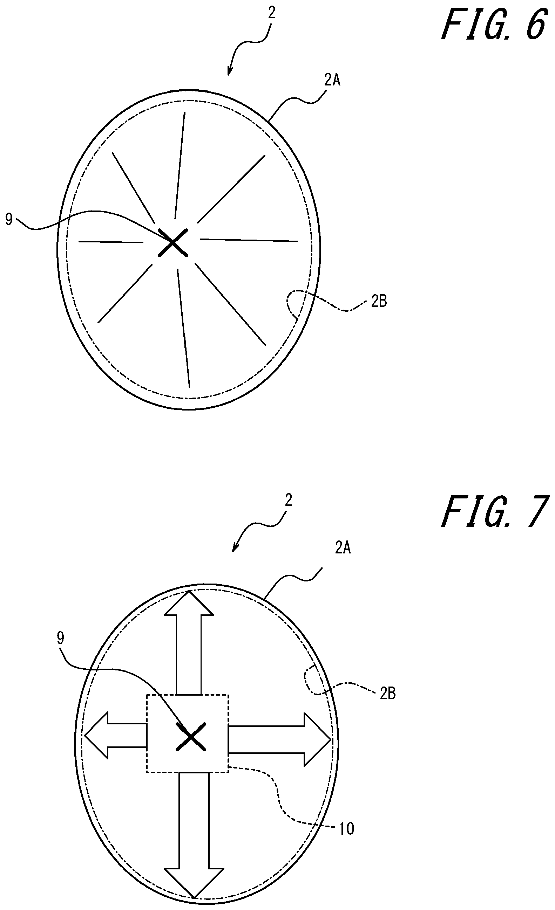

The controller 40 detects contours of the particles 2 based on feature points of the particles 2 (step S3). The controller 40 may realize the function of detecting contours of the particles 2 as the detection unit 42. Specifically, the controller 40 may detect contours of the particles 2 in directions spreading from the feature points 9 detected in the profile data of the particles 2 to the surrounding area, as illustrated in FIG. 6. In FIG. 6, a true contour 2A of the particle 2 is indicated by a solid line. Further, a detected contour 2B is indicated by a dot-dash line.

When the profile data of the particle 2 includes height data of the particle 2, the controller 40 calculates change in height along the direction of spread from the feature point 9 to the surrounding area. The controller 40 may detect a point where an amount of height change is a height change threshold or more as the contour 2B of the particle 2. The height change threshold may be set as appropriate. The controller 40 may detect a contour of the particle 2 by calculating the change in height for each of multiple directions spreading from the feature point 9 to the surrounding area.

When the profile data of the particle 2 includes image data of the particle 2, the controller 40 calculates change in luminance along the direction of spread from the feature point 9 to the surrounding area. The controller 40 may detect a point where an amount of luminance change is a luminance change threshold or more as the contour 2B of the particle 2. The luminance change threshold may be set as appropriate. The controller 40 may detect a contour of the particle 2 by calculating the change in luminance for each of multiple directions spreading from the feature point 9 to the surrounding area.

As illustrated in FIG. 7, the controller 40 may detect a contour of the particle 2 by setting an initial contour 10 based on the feature point 9 and expanding the initial contour 10 to the surrounding area. The controller 40 may set a rectangular closed curve, such as a square, enclosing the feature point 9 as the initial contour 10. The initial contour 10 is not limited to a rectangle, and may be other polygons or various curves such as a circle or ellipse. The controller 40 may set size of the initial contour 10 so that the initial contour 10 fits within the region of the particle 2. The controller 40 may set size or shape of the initial contour 10 based on human input. Size or shape of the initial contour 10 may be set based on size of the particle 2 for which a contour is to be detected, size of pixels in the profile data, or resolution of the measuring device 3 that measures the profile data.

The controller 40 may use an active contour model to detect a contour of the particle 2 based on the initial contour 10. By using an active contour model, a contour of a target object may be detected precisely and robustly. Active contour models may be understood by referring to the following references (Ryo Kurazume: Introduction of level set method and its implementation, JP 2015-114172 A). In an active contour model, an evaluation function is set that accepts an arbitrary curve as input and outputs an evaluation value of the input curve. The evaluation function is set so that the closer the input curve is to a contour of the particle 2, the smaller the value output as the evaluation value. The evaluation function is set to output a minimum value as the evaluation value when the input curve matches a contour of the particle 2. The evaluation function may output an evaluation value based on, for example, variance between data inside and outside the region enclosed by the input curve, length of the input curve, or area of the region enclosed by the input curve.

The controller 40 estimates a curve corresponding to a contour of the particle 2 so that the evaluation value output from the evaluation function becomes smaller. Based on a change in the evaluation value when the curve corresponding to a contour of the particle 2 is changed, the controller 40 iteratively changes the curve so that the evaluation value approaches the minimum value. That is, the controller 40 estimates the curve corresponding to a contour of the particle 2 so as to minimize the evaluation value, and detects the estimated curve as the contour of the particle 2. In FIG. 7, the curve estimated to minimize the evaluation value is represented by a dot-dash line as the contour 2B, which is detected by being estimated to approach the true contour 2A from inside. A method for detecting contours using an active contour model, called a level set method, proposed by Chan et al. (T. F. Chan and L. A. Vese, "Active Contours Without Edges", IEEE Transactions on Image Processing, 10(2), pp. 266-277, February 2001) may be used. The contour detection method is not limited to this example and may be any of various other methods, such as the Snake method, a type of active contour model.

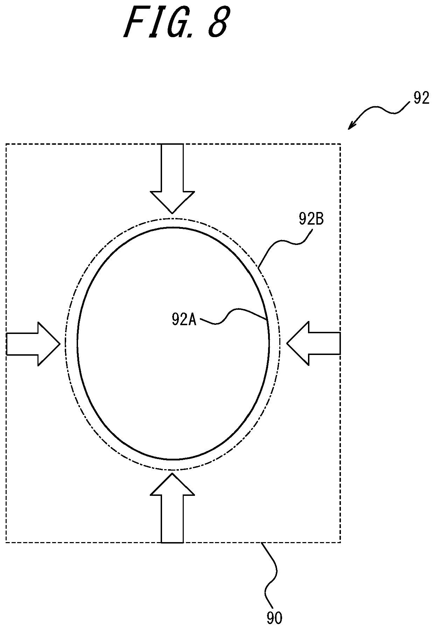

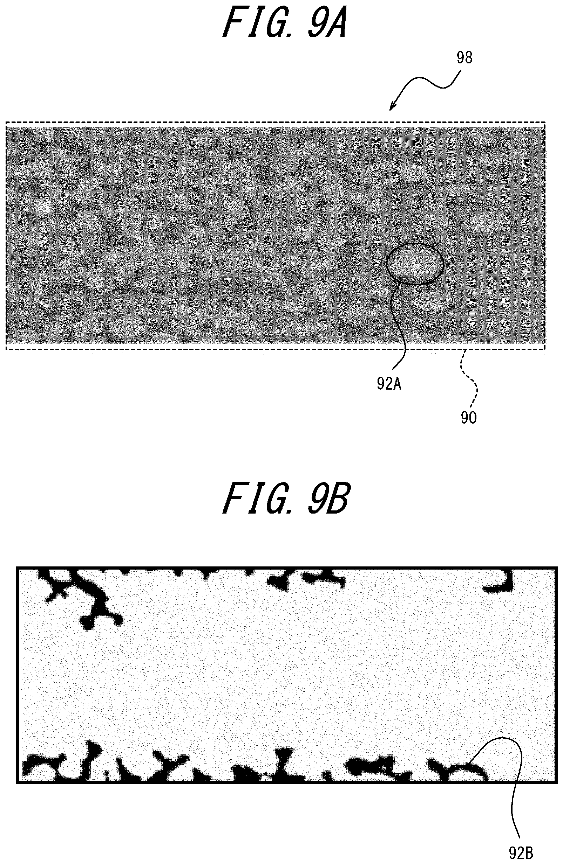

When using an active contour model to detect a contour, the controller 40 needs to set the initial contour 10 at a position close to the true contour 2A in some way. For example, the initial contour 10 may be set based on human input via the inputter 47. As a comparative example, as illustrated in FIG. 8, suppose that an initial contour 90, represented by a dashed line, is set at an outer edge of profile data of a particle 92. The particle 92 has a true contour 92A, represented by a solid line. When the particle 92 is present alone, the detected contour 92B, represented by dot-dash line, can approach the true contour 92A. However, as illustrated in FIG. 9A, when the initial contour 90 is set as shown by the dashed line on the outer edge of profile data 98 with other particles around the true contour 92A, only contours of particles positioned around the profile data 98 will be detected, as indicated by the contour 92B in FIG. 9B. As a result, the true contour 92A in FIG. 9A is not detected. That is, the controller 40 cannot properly detect contours of individual particles by simply setting initial contours on the outer edges of profile data.

According to the present embodiment, the controller 40 can set the initial contour based on feature points positioned inside the particles 2. By setting initial contours based on feature points, detection of contours of individual particles may be more precise than when initial contours are simply set on the outer edges of profile data.

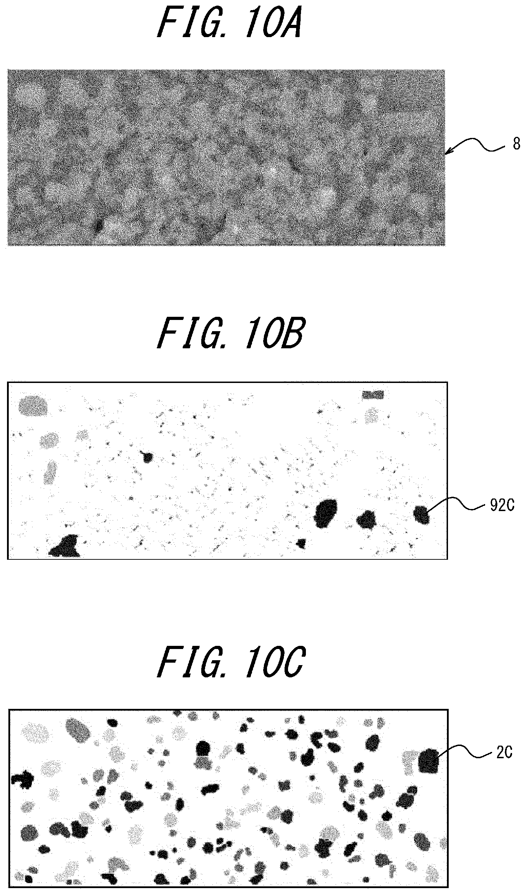

Further, as another comparative example, contours of the particles 2 may be detected based on amounts of change in height, luminance, or the like of the particles 2 represented by the profile data. For example, points for which large values are calculated by differential processing of the profile data may be detected as contours of the particles 2. Assume, for example, that contours of the particles 2 are detected in profile data 8 illustrated in FIG. 10A. A result of detecting contours from the profile data in FIG. 10A by differential processing of the profile data as a method according to a comparative example is illustrated in FIG. 10B. In FIG. 10B, a region enclosed by a detected contour is indicated as a detected particle region 92C. In contrast, a result of detecting contours from the profile data in FIG. 10A by the information processing method according to the present embodiment is illustrated in FIG. 10C. In FIG. 10C, a region enclosed by a detected contour is indicated as a detected particle region 2C. In FIG. 10C, small particle regions not detected in FIG. 10B are detected. That is, according to the information processing method of the present embodiment, contours of the particles 2 are detected with high precision regardless of size of the particles 2.

The controller 40 may display or output a detection result of contours of the particles 2 via the outputter 46, and may output a detection result of contours of the particles 2 to other devices via the communicator 48. After execution of the procedure in step S3 of FIG. 3, the controller 40 ends execution of the procedures of the flowchart of FIG. 3.

### <Calculation of property of particles 2>

The controller 40 may calculate a property of the particles 2 based on a result of detecting contours of the particles 2 from the profile data. The controller 40 may realize a function of calculating a property of the particles 2 as the calculation unit 43. The controller 40 may calculate, for example, particle size, shape, aspect ratio in plan view, surface roughness, or the like of the particles 2 as a property of the particles 2. The following describes an example where the controller 40 calculates particle size of the particles 2 as a property of the particles 2.

The controller 40 may calculate particle size of the particles 2 by a circular approximate fitting method, for example. A circular approximate fitting method approximates a region determined to be one of the particles 2 with a true circle having an area equal to the area of the region determined to be one of the particles 2, and the diameter of the approximated circle is calculated as the particle size of the one of the particles 2. The controller 40 is not limited to a circular approximate fitting method, and may calculate particle size of the particles 2 by any of various other methods. The controller 40 may display or output a result of calculation of a property of the particles 2 via the outputter 46, and may output a result of calculation of a property of the particles 2 to another device via the communicator 48.

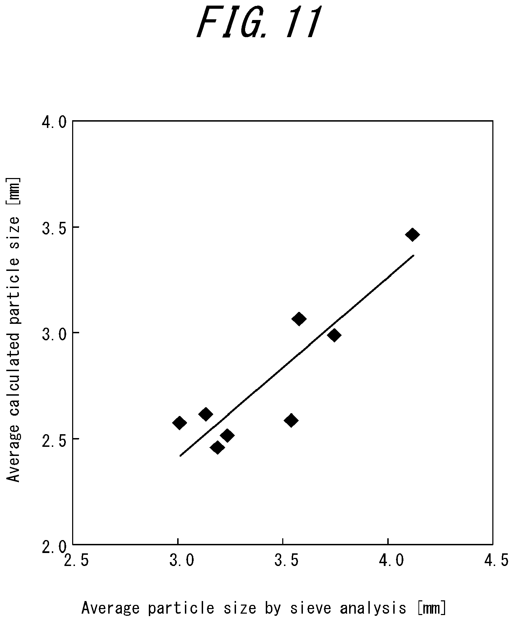

The following is a description of precision of calculation of particle size of the particles 2 according to the present embodiment, with reference to the graph in FIG. 11, which illustrates correlation between results of calculating particle size of the particles 2 according to the present embodiment and particle size calculated by sieve analysis. Particle size of the particles 2 according to the present embodiment is a value calculated from profile data of deposited material, which includes a deposited group of the particles 2. Further, particle size calculated by sieve analysis is a value obtained by calculating particle size by sieve analysis of each particle of the same group of the particles 2 of the deposited material for which particle size of the particles 2 was calculated according to the present embodiment, and calculating an average of the particle sizes as the particle size of the group of the particles 2. Specifically, deposited material was prepared with the particles 2 deposited, and particle size of the particles 2 was calculated from profile data. After particle size was calculated from the profile data, particle size of the particles 2 in the deposited material was calculated by sieve analysis. In the graph of FIG. 11, the horizontal axis represents average particle size as calculated by sieve analysis. The vertical axis represents average particle size as calculated by the information processing method according to the present embodiment. A correlation coefficient (R^2) between the calculation results from the sieve analysis and the calculation results from the information processing method according to the present embodiment was calculated to be 0.80. Particle size of the sieve analysis is considered to be close to actual particle size. Therefore, the calculation results from the information processing method according to the present embodiment are close to the actual particle size. That is, calculation precision of particle size of the particles 2 by the information processing method according to the present embodiment is high.

As described above, according to the information processing device 4 and the information processing method of the present embodiment, contours of the particles 2 may be detected with high precision based on feature points by detecting the feature points of the particles 2 from the profile data. Further, particle size of the particles 2 may be calculated with high precision based on detected contours. According to the present embodiment, particle size of the particles 2 is calculated as a property of the particles 2. Various other values may be calculated as a property of the particles 2. For example, a surface profile (surface roughness), including pores, sintered pores, and the like, of a surface of the particles 2 may be calculated as a property of the particles 2, based on fine irregularities of the profile data in particle regions enclosed by detected contours, or fine irregularities of contours. The information processing device 4 may also be referred to as a property calculating device that calculates a property of the particles 2.

According to the information processing device 4 and the information processing method of the present embodiment, initial contours of an active contour model may be set automatically and with high precision. Automatic and high precision setting of initial contours allows detection of contours and calculation of a property of the particles 2 in real time.

The information processing device 4 and the information processing method according to the present embodiment may be applied, for example, to calculation of a property of coke, ore, sintered ore, or the like, which are raw materials deposited on and transported by a conveyor in a production process such as that of a blast furnace. Further, the information processing device 4 and the information processing method according to the present embodiment are applicable to calculation of a property of fine ore, limestone, granulated particles, coal, or the like, which are raw materials having a smaller particle size than coke, ore, sintered ore, or the like.

### (Other embodiments)

Profile data of the particles 2 may include noise. The controller 40 of the information processing device 4 may execute smoothing processing to reduce noise as preprocessing to detect feature points from profile data. Smoothing processing may be achieved by reducing a high frequency component of a spatial frequency of profile data, by using a low-pass filter or a band-pass filter, for example. The wider a range of frequencies to be reduced (the lower a cutoff frequency on the high frequency side), the higher the degree of smoothing processing. Further, smoothing processing may be achieved by averaging pixels of profile data by using a filter of a defined size. The larger the filter size, the higher the degree of smoothing processing. By executing a high degree of smoothing processing, a degree of irregularity (surface roughness) of profile data is reduced.

A low degree of smoothing processing may both reduce noise and detect small particle size of the particles 2. A high degree of smoothing processing may reduce noise and improve the precision of detection of particles having a large particle size.

The controller 40 may detect contours of the particles 2 that have a large particle size and contours of the particles 2 that have a small particle size separately by smoothing profile data according to two different degrees. That is, the controller 40 may detect contours of the particles 2 in two stages. Specifically, the controller 40 may execute a high degree of smoothing processing as first smoothing processing as a first stage to generate first smoothing data, and detect feature points and contours of relatively large particles of the particles 2 based on the first smoothing data. Feature points of the particles 2 detected based on the first smoothing data are also referred to as first feature points. Contours of the particles 2 detected based on the first smoothing data are also referred to as first contours.

The controller 40 may execute a low degree of smoothing processing as second smoothing processing as a second stage to generate second smoothing data, and detect feature points and contours of relatively small particles of the particles 2 based on the second smoothing data. Feature points of the particles 2 detected based on the second smoothing data are also referred to as second feature points. Contours of the particles 2 detected based on the second smoothing data are also referred to as second contours. In this way, the effect of noise is easily reduced in detection of contours of large particles of the particles 2 (the first contours). Further, contours of small particles of the particles 2 (the second contours) are more easily detected with a lower degree of smoothing. That is, both detection of contours of the larger of the particles 2 (the first contours) and detection of contours of the smaller of the particles 2 (the second contours) may be achieved.

Before the second stage of processing, a region enclosed by a contour of the larger of the particles 2 (first contour) detected in the first stage of processing may be excluded from the profile data or masked on the profile data by the controller 40. That is, the controller 40 may detect the second feature points or the second contours in a region of the profile data excluding regions enclosed by the first contours. By taking into consideration the regions detected in the first stage of processing in the second stage, the controller 40 may detect only contours of the smaller of the particles 2 without overlapping with contours of the larger of the particles 2 already detected. The controller 40 may delete overlapping contours of the particles 2 detected in each of the first stage and the second stage of processing.

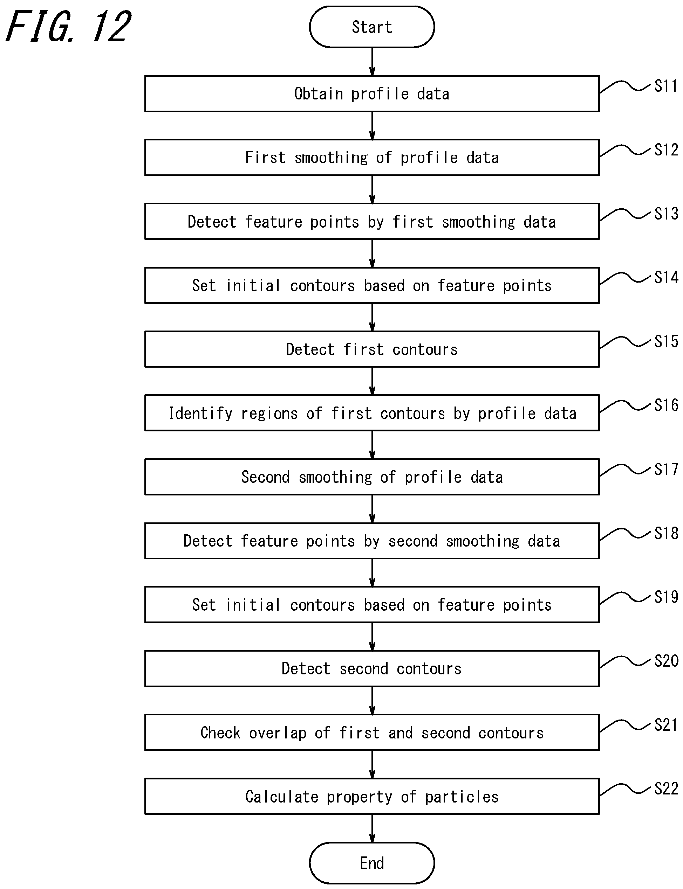

The controller 40 may execute the information processing method including the flowchart procedures illustrated in FIG. 12 as the two stage processing described above.

The controller 40 obtains profile data of the particles 2 (step S11). The controller 40 may obtain the profile data of the particles 2 by operating in the same or similar manner to the procedure of step S1 in FIG. 3.

The controller 40 executes first smoothing of the profile data (step S12). The controller 40 detects feature points (first feature points) using the first smoothing data (step S13). The controller 40 sets initial contours based on the feature points (first feature points) (step S14). The controller 40 detects first contours based on the initial contours by using an active contour model (step S15).

The controller 40 identifies regions enclosed by the first contours in the profile data (step S16). Specifically, the controller 40 may exclude data in the regions enclosed by the first contours from the profile data, and may set the regions enclosed by the first contours as a mask on the profile data.

The controller 40 executes second smoothing of the profile data (step S17). The controller 40 detects feature points (second feature points) using the second smoothing data (step S18). The controller 40 sets initial contours based on the feature points (second feature points) (step S19). The controller 40 detects second contours based on the initial contours by using an active contour model (step S20).

The controller 40 checks for overlap between the first contours and the second contours (step S21). Specifically, when a region enclosed by one of the first contours overlaps a region enclosed by one of the second contours, the controller 40 may modify contour detection results so that only one of the overlapping regions is left and the other region is deleted. The controller 40 calculates a property of each particle based on the detection result of contours of each particle (step S22). After execution of the procedure in step S22, the controller 40 ends execution of the procedures of the flowchart of FIG. 12.

The controller 40 may detect multiple feature points for a single one of the particles 2. In such a case, particle regions enclosed by contours detected based on each feature point may overlap. The controller 40 may determine whether overlapping particle regions exist based on detected contours and modify the detection results of contours based on a determination result. The controller 40 may, for example, leave only one of the overlapping contours and delete a detection result for another contour. In this way, multiple detection of a single particle region according to multiple vertices may be prevented. As a result, contour detection precision may be enhanced. Further, the larger the particles 2 of raw material, the more complex the shape of the particles 2 tends to be. When detecting contours of raw material that has a large particle size or a shape that is not close to a sphere, there may be multiple vertices on individual particles. In detecting contours of such a raw material, the processing described above is effective in improving the detection precision of contours of particles and preventing erroneous calculations.

Further, ideally, the active contour model converges on contour positions that minimize evaluation values (energy) of an evaluation function. However, there are cases where contour positions do not converge depending on the target. When contour positions converge, there is no problem in setting a large number of iterations to change and search for a contour, because the contour will continue to stay at positions that have minimum evaluation values (energy). However, when contour positions do not converge, the number of iterations need to be set appropriately or a result may deviate far from contour positions. Therefore, the number of iterations is preferably set appropriately in advance. Even when contours do not converge at contour positions, contours extracted by an active contour model roughly capture regions of particle presence. Therefore, to accurately capture particle contours, edge detection processing may be applied within contours extracted by an active contour model. Edge detection processing may be configured, for example, as stand-alone Canny filter processing able to easily detect even indistinct edges. Edge detection processing may be configured, for example, as a combination of Canny filter processing and dilation processing or erosion processing, for example. Even when a single contour is not extracted by Canny filter processing alone, a single contour may be connected by dilation processing or erosion processing. By applying edge detection processing to a narrowly defined range of an individual particle region, it may be possible to capture in detail a contour of an indistinct individual particle that could not be captured by applying edge detection processing to an entire image or distance data of a deposit of multiple particles.

In detecting contours of the particles 2, the controller 40 may detect contours using edge detection processing in at least one of regions enclosed by the first contours or regions enclosed by the second contours.

### (Method of producing sintered ore)

Contours of granulated particles that are raw material for sintered ore may be detected by the information processing device 4 and the information processing method described above. Further, a property of granulated particles may be calculated. Size of post-granulation granulated particles is typically desired to be large and uniform over time (whenever observed). Further, particle size is desired to be uniform across particles. However, due to variations in properties of particles of raw material prior to granulation, or due to the effects of water content brought in with raw material, size of post-granulation granulated particles may vary over time, even though a constant operating amount is maintained for operation of a granulation process. Further, particle size may become smaller than a desired size. As a result, aeration is likely to be destabilized or reduced when such granulated particles are charged into a sintering machine. Destabilization or reduction of aeration may reduce the quality of sintered ore produced.

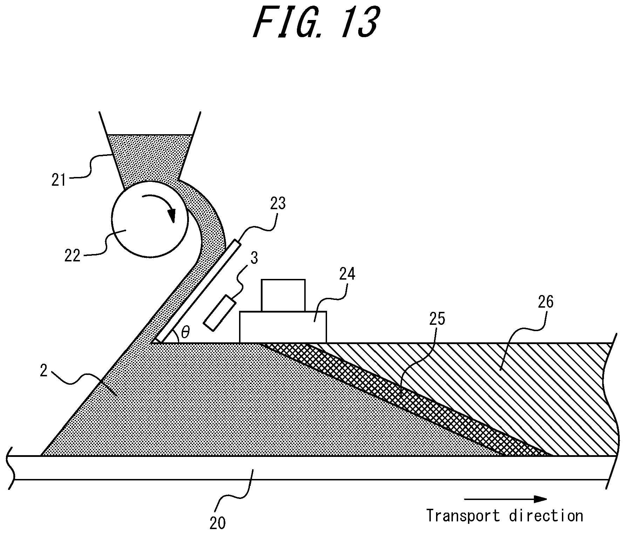

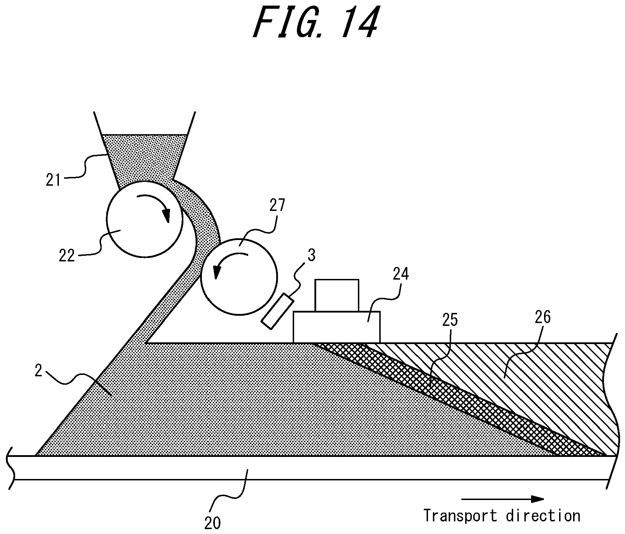

A method of charging post-granulation granulated particles into a sintering machine is also important. Schematic configurations of a raw material charging device are illustrated in FIG. 13 and FIG. 14.

As illustrated in FIG. 13, the raw material charging device includes a surge hopper 21, a drum feeder 22, and a chute 23. The raw material charging device supplies and deposits the particles 2, which here are a raw material for producing sintered ore in a sintering furnace, on an endless moving pallet 20. Specifically, the surge hopper 21 feeds the particles 2 into the drum feeder 22. The drum feeder 22 rotates clockwise and feeds the particles 2 into the chute 23. The chute 23 is inclined at an angle represented by θ with respect to the horizontal plane and the particles 2 fed from the drum feeder 22 slide on a surface of the chute 23 to feed the particles 2 onto the pallet 20 and deposit the particles 2 on the pallet 20.

The pallet 20 charges the deposited material including the particles 2 into the sintering furnace by transporting the particles 2 in a transport direction (to the right in FIG. 13).

The sintering furnace includes an ignition furnace 24. The ignition furnace 24 ignites a surface layer of the deposited material transported by the pallet 20. The deposited material includes a combustible material such as condensation material, carbon material, or the like. The ignition furnace 24 ignites the combustible material surface layer of the deposited material. The ignited surface layer begins to burn. The burning portion is represented as a combustion portion 25.

The sintering furnace further includes an exhaust fan that draws air from the top of the deposited material on the pallet 20 toward the bottom of the pallet 20. While the deposited material is transported by the pallet 20, the air flow from the top to the bottom of the pallet 20 causes the combustion portion 25 to migrate from surface layer toward the bottom. The heat of combustion generated in the combustion portion 25 heats and melts the particles 2. The particles 2 melted in the combustion portion 25 combine with others of the particles 2 to form sintered ore 26 after combustion is complete. The more the transport by the pallet 20 proceeds, the thicker the layer of the portion of the deposited material that has been transformed from the particles 2 into the sintered ore 26. When the combustion portion 25 reaches the bottom of the pallet 20, all of the particles 2 are transformed into the sintered ore 26.

As illustrated in FIG. 14, the raw material charging device may include a drum chute 27 instead of the chute 23 in FIG. 13. In such a case, the drum feeder 22 rotates clockwise to feed the particles 2 into the drum chute 27. The drum chute 27 rotates counterclockwise to feed the particles 2 onto the pallet 20 and deposit the particles 2 on the pallet 20.

In the post-granulation granulated particles deposited on the pallet 20, it is desirable that particle size distribution in the height direction does not change over time. However, when the method of charging the sintering machine is not changed when variation in post-granulation particle size occurs, distribution of particle size in the height direction of the post-granulation granulated particles deposited on the pallet 20 will change. As a result, the sintering machine becomes prone to destabilization or reduction of aeration. Destabilization or reduction of aeration may reduce the quality of sintered ore produced.

According to the information processing device 4 and the information processing method of the present embodiment, particle size of granulated particles may be easily ascertained. Further, ascertaining particle size of granulated particles is possible at all times. In the raw material charging device illustrated in FIG. 13 or FIG. 14, a property of the particles 2 in the deposited material before ignition by the ignition furnace 24 is measured by the measuring device 3. The raw material charging device may feed back a measurement result of a property of the particles 2 to adjust conditions under which the particles 2 are fed.

Accordingly, in a production process using granulated particles, it is possible to control a desired particle size by changing operating factors that affect particle size, thereby reducing variation in particle size. Further, by adjusting operating factors related to how raw material is charged into the sintering machine, variation over time in particle size variation in the height direction of raw material deposited on the pallet 20 of the sintering machine may be adjusted to be more constant. In other words, a production condition of sintered ore may be set based on particle size of granulated particles. Specifically, as a production condition of sintered ore, post-granulation particle size may be controlled by changing a mix proportion of at least one sintering mix raw material among: an iron-containing raw material, an auxiliary raw material, or a carbon-containing raw material. Further, as a production condition of sintered ore, post-granulation particle size may be controlled to a desired particle size by adjusting at least one of the following: granulator rotation speed, residence time, or added water content. Further, as a production condition of sintered ore, variation over time in particle size variation in the height direction of raw material deposited on the pallet 20 of the sintering machine may be adjusted to be more constant by adjusting at least one of the following: rotation speed of the drum feeder 22, angle (Θ) of the chute 23, or rotation speed of the drum chute 27 of the raw material charging device. More specifically, when particle size distribution of post-granulation particle size is wide, the rotation speed of the drum feeder 22 and the angle (Θ) of the chute 23 of the raw material charging device are increased, and when particle size distribution of post-granulation granulated particles is narrow, the rotation speed of the drum feeder 22 and the angle (Θ) of the chute 23 of the raw material charging device are decreased, and it is thereby possible to adjust variation over time in particle size variation in the height direction of raw material deposited on the pallet 20 of the sintering machine to be more constant.

When the raw material charging device includes the configuration illustrated in FIG. 13, a property of the particles 2 in the deposited material is determined based on at least one of: the rotation speed of the drum feeder 22 or the angle (Θ) of the chute 23. In such a case, in setting a production condition of sintered ore, at least one condition of the raw material charging device may be adjusted among: the rotation speed of the drum feeder 22 or the angle (Θ) of the chute 23.

When the raw material charging device includes the configuration illustrated in FIG. 14, a property of the particles 2 in the deposited material is determined based on at least one of: the rotation speed of the drum feeder 22 or the rotation speed of the drum chute 27. In such a case, in setting a production condition of sintered ore, at least one condition of the raw material charging device may be adjusted among: the rotation speed of the drum feeder 22 or the rotation speed of the drum chute 27.

That is, in setting a production condition of sintered ore, at least one condition of the raw material charging device may be adjusted among: the rotation speed of the drum feeder 22, the angle (Θ) of the chute 23, or the rotation speed of the drum chute 27.

In a calculation result of a property of the particles 2 in raw material for producing sintered ore in the sintering furnace, when particle size distribution is wide, conditions for feeding the particles 2 according to the raw material charging device may be set so that the rotation speed of the drum feeder 22 and the angle (Θ) of the chute 23 are increased. Conversely, when the particle size distribution is narrow, the conditions for feeding the particles 2 according to the raw material charging device may be set so that the rotation speed of the drum feeder 22 and the angle (Θ) of the chute 23 are decreased.

Controlling post-granulation particle size stabilizes aeration when charging a sintering machine. Further, aeration of a sintering machine may be stabilized by adjusting a charging method of post-granulation particles. As a result, high-quality sintered ore may be produced.

Although embodiments of the present disclosure have been described based on the drawings and examples, it should be noted that a person skilled in the art may make variations and modifications based on the present disclosure. Therefore, it should be noted that such variations and modifications are included within the scope of the present disclosure. For example, functions and the like included in each component and step may be rearranged, and multiple components and steps may be combined into one or divided, as long as no logical inconsistency results. The embodiment according to the present disclosure may be realized as a program executed by a processor provided to a device or as a storage medium on which the program is stored. The scope of the present disclosure should be understood to include these examples.

### REFERENCE SIGNS LIST

100 information processing system
1 conveyor
2 particles (2A: true contour, 2B: detected contour, 2C: detected particle)
3 measuring device
4 information processing device (40: controller, 41: measurement unit, 42: detection unit, 43: calculation unit, 46: outputter, 47: inputter, 48: communicator)
8 profile data
9 feature point
10 initial contour
20 pallet
21 surge hopper
22 drum feeder
23 chute
24 ignition furnace
25 combustion portion
26 sintered ore
27 drum chute

## Claims

1. An information processing method comprising:
obtaining profile data of raw material that includes particles, the profile data including distance data to the raw material or image data of the raw material;
detecting feature points based on the profile data; and
detecting, from the profile data, contours of at least some of the particles, based on the feature points.

2. The information processing method according to claim 1, wherein, in the detecting the contours, initial contours are set based on the feature points.

3. The information processing method according to claim 1 or 2, wherein, in the detecting the contours, the contours are detected using an active contour model.

4. The information processing method according to any one of claims 1 to 3, wherein, in the detecting the feature points, vertices of the particles are detected as the feature points.

5. The information processing method according to claim 4, wherein, in the detecting the feature points, local maximum values in the profile data are detected as the vertices of the particles.

6. The information processing method according to any one of claims 1 to 5, wherein,
in the detecting the feature points, a first feature point is detected based on first smoothing data derived from first smoothing executed on the profile data, a second feature point is detected based on second smoothing data derived from second smoothing of a smaller degree than the first smoothing executed on the profile data, and
in the detecting the contours, a first contour is detected from the profile data based on the first feature point and a second contour is detected from the profile data based on the second feature point.

7. The information processing method according to claim 6, wherein, in the detecting the feature points, the second feature point is detected in a region of the profile data excluding a region enclosed by the first contour.

8. The information processing method according to claim 6 or 7, wherein, in the detecting the contours, the second contour is detected in a region of the profile data excluding a region enclosed by the first contour.

9. The information processing method according to any one of claims 6 to 8, wherein, in the detecting the contours, in at least one of a region enclosed by the first contour or a region enclosed by the second contour, a contour is detected using edge detection processing.

10. The information processing according to any one of claims 1 to 9, further comprising measuring a particle property based on the contours detected.

11. The information processing method according to claim 10, wherein, in the measuring the particle property, particle size is measured as the particle property.

12. An information processing device, comprising a controller configured to execute the information processing method according to any one of claims 1 to 11.

13. An information processing system, comprising the information processing device according to claim 12 and a measuring device configured to output the profile data of the raw material to the information processing device.

14. An information processing program configured to cause a processor to execute the information processing method according to any one of claims 1 to 11.

15. A method of producing sintered ore, the method comprising:
measuring a particle property of particles included in a raw material by executing the information processing method according to claim 10 or 11; and
setting a production condition of sintered ore using the raw material based on a calculation result of the particle property.

16. The method of producing sintered ore according to claim 15, wherein, in the setting the production condition of the sintered ore, a mix proportion of at least one sintering mix raw material is changed among: an iron-containing raw material, an auxiliary raw material, or a carbon-containing raw material.

17. The method of producing sintered ore according to claim 15 or 16, wherein, in the setting the production condition of the sintered ore, at least one condition is adjusted among: granulator rotation speed, residence time, or added water content.

18. The method of producing sintered ore according to any one of claims 15 to 17, wherein, in the setting the production condition of the sintered ore, at least one condition of a raw material charging device is adjusted among: drum feeder rotation speed, chute angle, or drum chute rotation speed.

19. The method of producing sintered ore according to claim 18, wherein,
when particle size distribution is wide in the calculation result of the particle property, the drum feeder rotation speed and the chute angle of the raw material charging device are increased, and
when the particle size distribution is narrow in the calculation result of the particle property, the drum feeder rotation speed and the chute angle of the raw material charging device are decreased.
